# NEW EUROPEAN PATENT SPECIFICATION

(11) **EP 1 694 141 B2**
(45) Date of publication and mention of the opposition decision: **04.10.2017**
(45) Mention of the grant of the patent: 16.01.2008
(21) Application number: 04803326.0
(22) Date of filing: 26.11.2004
(51) Int. Cl.: A23L 2/39, A23P 10/40

(54) **BEVERAGES AND THEIR PREPARATION**
GETRÄNKE UND VERFAHREN ZU IHREN HERSTELLUNG
BOISSONS ET LEUR PREPARATION

(30) Priority: 23.12.2003 GB 0329832
(43) Date of publication of application: 30.08.2006
(73) Proprietor: Unilever N.V., 3013 AL Rotterdam (NL); Unilever PLC, London Greater London EC4P 4BQ (GB)
(72) Inventor: GREBENKAMPER, Kai, UNILEVER R & D VLAARDINGEN, NL-3133 AT Vlaardingen (NL); KOHLUS, Reinhard, Unilever Bestfoods Deutschland, 74074 Heilbronn (DE); VELIKOV, Krassimir P., UNILEVER R & D VLAARDINGEN, NL-3133 AT Vlaardingen (NL)
(74) Representative: Towler, Philip Dean
(86) International application number: PCT/EP2004/013501
(87) International publication number: WO 2005/063056

(56) References cited:
- EP-A- 0 060 764
- EP-A- 0 958 746
- WO-A1-2004/086879
- WO-A1-2005/063056
- FR-A- 2 397 162
- GB-A- 1 537 456
- US-A- 1 925 441
- US-A- 2 919 195
- US-A- 3 862 342
- US-A- 4 349 577
- PATENT ABSTRACTS OF JAPAN vol. 005, no. 004 (C-038), 13 January 1981 (1981-01-13) & JP 55 131346 A (YUKIJIRUSHI SHOKUHIN KK), 13 October 1980 (1980-10-13)
- PATENT ABSTRACTS OF JAPAN vol. 1998, no. 05, 30 April 1998 (1998-04-30) & JP 10 014494 A (NITTA GELATIN INC), 20 January 1998 (1998-01-20)
- GLAHN P E ET AL: "CASEIN-PECTIN INTERACTION IN SOUR MILK BEVERAGES" SYMPOSIUM ON FOOD INGREDIENTS EUROPE, 4 October 1994 (1994-10-04), pages 252-256, XP000604284
- WALSTRA P. ET AL: 'Dairy Technology', 1999, MARCEL DEKKER, INC., NEW YORK
- JP KOKAI 62-242 (JP 60-136879) 06.01.1987

## Description

### Field of the Invention

The present invention relates to beverages, especially beverages having acidic pH and processes for preparing them. The beverages may be in powder form for conversion into a drink by the addition of a liquid.

### Background of the Invention

At low pH, protein suspensions tend to coagulate and precipitate. In order to produce stable acidic foods, different stabilisers have been used to prevent coagulation and precipitation of protein particles. Without such stabiliser, unwanted effects such as phase separation, precipitation and sandiness are observed. In addition, all stabilisers increase viscosity when used, and are therefore not suited to the tastes of today's consumers who prefer low viscosity and light food textures. The use of stabilisers is disclosed in many patent documents relating to milk products. A number of modifications to give lower viscosity and prevent coagulation, precipitation and phase separation of protein particles in products have been proposed, such as use of water-soluble soybean polysaccharides as dispersing agents as described in JP-A- 57 458, but when the pH of the product approaches the neutral range the stability is often lowered, and therefore products with even higher stability have been desired. GB-A-2314564 discloses the use of beet-derived pectin for refining beverages produced by alcohol fermentation. EP-A-0958746 discloses the use beet-derived pectin incorporated into acidic protein foods as a stabiliser.

It is also known to granulate powdered soybean protein in a fluidized bed agglomerator whilst spraying-on an aqueous solution of carbohydrate, as disclosed in US-A-2002/146487 and US-A-2003/124226.

FR2397162 discloses a powdered mixture used to obtain an acidic dairy beverage.

Stabilisers such as methoxy pectin (HM-pectin), sodium carboxymethylcellulose (CMC-Na), propylene glycol alginate ester (PGA), water-soluble soybean polysaccharides (SSP), and beet-derived pectin (BD-pectin) have normally been used in ready-to-drink products, either alone or in combination (including mixtures with other polysaccharides) for production of ready-to-drink acidic protein foods in order to prevent coagulation and precipitation of protein particles.

Thus, there remains a need to provide acidic beverages, which are either in liquid, drinkable form or which can be made into a drinkable composition by dispersing in a liquid, the drinkable compositions having a low viscosity, preferably in the range of 5 to 50 mPas or 5 to 60 mPas at a shear rate of either 0.1 s⁻¹ or 10 s⁻¹ beverages avoid the drawbacks of coagulation, precipitation, phase separation, etc. of protein particles in a wide acidity range. In addition, the beverages preferably have a fresh taste, do not produce sandiness or chalkiness sensation, and do not have a sticky mouth feeling.

### Summary of the Invention

According to a first aspect of the invention there is provided a process for making a powdered precursor for preparing an acidic beverage upon admixture of the powdered precursor with a liquid, the process comprising the steps:
(a) preparing a first slurry comprising a protein source and a stabiliser in a weight ratio of protein:stabiliser of 5:1 to 12:1, said first slurry having neutral or acidic a pH below the isoelectric point of the protein or above the isoelectric point of the protein and said stabilizer being selected from pectins, carboxymethylcelluloses, soybean polysaccharides, glycol alginate esters and mixtures thereof,
(b) adjusting the pH of the first slurry, if necessary, to a value in the range of from 3.5 to 4.2; and
(c) spray drying the first slurry after step (a) or step (b), wherein a second slurry is prepared comprising the protein source, a third slurry is prepared comprising the stabiliser and the second and third slurries are then mixed to form said first slurry.

An acidic beverage can be made by the admixture of a liquid, preferably an aqueous liquid and a powdered precursor made by the process of the first aspect of the invention. An aqueous liquid is one which contains at least some water, preferably at least 10%, more preferably at least 25%, most preferably at least 50% by weight of water. The term also includes substantially pure water such as tap water.

In a particularly preferred embodiment, the inventors have ground that the above-mentioned problems can be overcome by spray drying of solutions of plant proteins and stabilisers at acidic pH.

### Detailed Description of the Invention

The beverage powder precursors must be mixed with a liquid in order to form a composition which is suitable for a consumer to drink. Any suitable liquid can be used, but preferred examples are water and juices such as citrus juices.

A second slurry is prepared comprising the protein source, a third slurry is prepared comprising the stabiliser and the second and third slurries are admixed to provide said first slurry.

If the first slurry has a pH outside the target range of from 3.5 to 4.2, then before spray drying in step (c), in step (b) its pH is adjusted by conventional means.

### The Protein Source

The protein source may comprise any specific type of protein, e.g. animal, in particular dairy protein, or plant protein. Preferably the protein source provides at least some plant protein, for example soy protein, pea protein or lupin protein, or mixtures thereof. These proteins can be intact or hydrolysed, and can be used separately or in combination with each other.

The total amount protein to be used may be generally about 0.5 to 10 wt%, preferably 0.5 to 4 wt%, and preferably around 2.7% wt (e.g. 4g in a 150g serving) with respect to the final product.

In relation to the first slurry, the amount of protein source in the second slurry could for example be from 5 to 20wt%.

### The Stabiliser

The stabiliser is selected from pectins, carboxymethylcelluloses, soybean polysaccharides or glycol alginate esters or mixtures thereof.

In particular, preferred stabilisers are methoxy pectin (HM-pectin), sodium carboxymethylcellulose (CMC-Na), propylene glycol alginate ester (PGA), water-soluble soybean polysaccharides' (SSP), and beet-derived pectin (BD-pectin). These may be used alone or in combination. The most preferred stabilisers are pectins.

The amount of the stabiliser to be used may be generally about 0.05-10%wt, preferably 0.05-2wt%, e.g. 0.2-2wt% with respect to the final beverage, but these ranges do not restrict the scope of the invention because they may vary depending on differences in the protein concentration. The weight ratio of protein:stabiliser is from 5:1 to 12:1, e.g. 7:1 to 9:1.

The amount of stabiliser in the first slurry is preferably from 5 to 20wt%.

With regard to the third slurry, the amount of stabiliser in the third slurry is preferably from 0.01 to 20wt%, e.g. such as from 0.1 to 6wt%.

Any of the stabilisers discussed above may be used in combination with one or more other auxiliary stabilisers such as locust bean gum, tamarind seed polysaccharide, gelan gum, xanthan gum, guar gum, tara gum, gum Arabic, kalaya gum, carrageenan, starches and cellulose derivates, agar or the like. In this way, it is possible to produce acidic products which are stable and have low viscosity and a light texture across a wide pH range and suitable for spray drying.

### Carbohydrate

Preferably, carbohydrate is included in the first slurry, most preferably introduced via the protein source-containing second slurry. Preferred carbohydrates include sugars, starches, and maltodextrin.

### Other Ingredients

The powder preferably further contains emulsifier, organic acid (such as lactic, malic or citric) and fat and is fortified with minerals, vitamins, etc. Once dispersed in the liquid such as water or juice, the drink is preferably stable against coagulation and phase separation for at least 30 minutes.

### Product Form

The powdered precursor may be one adapted to make any desired acidic beverages, for example yoghurts or acidic protein drinks.

The acidic powdered beverages (or "instant protein drinks") are most preferably acidic protein drinks, lactic acid bacteria beverages, liquid yoghurt or acidic protein drink and can be made into drinkable compositions by adding water, citrus juices or other juices.

### The Process

The protein and stabiliser can mixed in two different ways. Either (i) the pH of the first slurry can be brought to acid pH below the isoelectric point of the protein, preferably less than 3.9, the protein dispersed and mixed, the stabiliser added, mixed again and the pH adjusted, or (ii) the first slurry can be brought to an acid pH above the isoelectric point, protein can be dispersed and mixed, then further mixed with a pre-dispersed stabilised solution, then the pH is adjusted as desired.

The following two non-limiting methods illustrate these two general methods respectively:
Method A: The pH is lowered to around 2.0, then the protein is added (at around 40°C), mixed in a high-shear mixer, the HM Pectin solution added (which has been dissolved at around 60°C to 80°C), carbohydrate is added followed by further mixing and then the pH is ground to 4.0. Preferably, the mixture is homogenised.
Method B: The protein is dispersed in water, mixed in a high-shear mixer, then a pectin solution (which has been dissolved at around 60°C to 80°C) is incorporated in this mixture, with pH around 2, sugar is added followed by further mixing and the pH is adjusted to around 4.0. Preferably the mixture is homogenised.

When a spray drying operation is used, the feed may be a stable solution of the ingredients with a dry matter content between 10 and 50%, preferably between 30 and 40% (m/m). This slurry is spray dried in a so-called spray-drier, resulting in fine particulate matter. A spray dryer is a system where the feed liquid is atomised by means of any type of atomiser, i.e. rotary, two or one phase nozzle, and subsequently dried to from particulate matter. Where the particle size is between 5 and 400 µm, eg between 5 and 100 µm. To produce a dry powder, the spray tower is preferably operated at a temperature of from 150 to 250°C, depending on the dry matter content and tower loading (mass flow ratio slurry to air). The resulting powder will be typically hydrophobic. Due to its fineness and hydrophobicity the material is typically difficult to disperse in water without lump formation. An additional agglomeration or granulation step increases the particle size of each particle. The initial particle will have a d_{4,3} average particle diameter of from 5 µm to 100 µm, for example from 5µm to 35µm whereas the preferred d_{4,3} average particle size ex granulator lies preferably between 50 and 600 µm, more preferably between 150 and 400 µm. This improve the dispersibility so far that it can be easily use in a powdered drink mix, where the spray-dried powder is used, in a mixture with other powders. The agglomeration preferably takes place in a fluid bed type of agglomerator, like a Fielder-Aeromatic type. The binder fluid is preferably plain water. It is advantageous to agglomerate a mixture of the spray-dried material with a carbohydrate like sucrose or maltodextrin or an easily dissolving salt. Alternatively any other type of agglomerator can be used, e.g.:
- high shear mixer granulator e.g. Schugi type granulator or Loedige ploughshare type,
- pressure granulators, e.g. Bepex basket extruder type granulators, or
- steam granulators.

The most favourable technique is the use of a combined spray-drier/fluidised bed system, where the powder from the spray drier is directly granulated. Such a system would be for example a Fluidized Spray Dryer or a Multistage Spray Dryer form GEA Niro A/S. The agglomeration could be just due to the remaining cohesiveness of the powder due to steam treatment or water spray on, with or without addition of easily water soluble material as binder. Such material would be carbohydrates, salts or polymers known as binder.

The addition of lecithin can improve the wetability and dispersability of the powder.

The present invention will now be explained in more detail by way of the following non-limiting examples. Throughout these examples, the parts and percentages are based on weight unless otherwise specified.

### Examples

### Example 1

The composition (see Table1) of the soy protein isolate (FXP H0219D, 86.7% ex Solae), maltodextrin and water are mixed with a high-shear mixer, Silverson Batch mixer type for 15 minutes at 60°C. A second aqueous solution of citric acid (CA) at pH 2.0 and 4% HM Pectin (YM 115H ex CP Kelco) was prepared. The complete mixture is again homogenised with the high-shear mixer. The pH of said concentrate is adjusted to 3.9 by citric acid addition.

The concentrates prepared thereby have a total protein content of 6.7-17.35 wt%, a total hydrocolloid amount of 0.23 - 0.79% wt and a total solid content of 20-30 wt% (Table 1).

**Table 1**

| Slurry | T1* | T2 | T4* | T5 | T6 |
|---|---|---|---|---|---|
| Solids % | 20 | 25 | 25 | 30 | 30 |
| Water % | 80.00 | 75.00 | 75.00 | 70.00 | 70.00 |
| Protein % | 6.73 | 8.21 | 14.30 | 10.04 | 9.63 |
| MD % | 11.70 | 14.29 | 14.48 | 17.35 | 16.64 |
| Pectin % | 0.23 | 0.86 | 0.87 | 0.82 | 0.79 |
| CA % | 1.35 | 1.64 | 1.33 | 1.79 | 1.72 |
| Lecithin % | 0.00 | 0.00 | 0.00 | 0.00 | 1.23 |

| | | | | | |
|---|---|---|---|---|---|
| *comparative examples | | | | | |

The resulting mixture was pumped to the nozzle of a two fluid nozzle atomiser mounted in the commercial spray-drying unit, a Niro Production Minor type. Inlet temperature was set to 200°C.

Outlet temperature yield 110°C. Microcapsules with a mean size of ca. 20µm were obtained.

The composition of the resulting powder is given in Table 2.

**Table 2**

| Powder | T1* | T2 | T4* | T5 | T6 |
|---|---|---|---|---|---|
| H₂O % | 3.1 | 3.1 | 3.1 | 3.0 | 2.8 |
| Protein % | 32.6 | 31.9 | 32.3 | 32.5 | 31.2 |
| MD % | 56.7 | 55.4 | 56.2 | 56.2 | 53.9 |
| Pectin % | 1.1 | 3.3 | 2.8 | 2.7 | 2.6 |
| CA % | 6.5 | 6.4 | 5.2 | 5.8 | 5.6 |
| Lecithin % | 0.0 | 0.0 | 0.0 | 0.0 | 4.0 |

| | | | | | |
|---|---|---|---|---|---|
| *comparatvie examples | | | | | |

The viscosity was tested in a cone-plate geometry of a rotational rheometer. Temperature was set to 20°C. The data are taken from the down curve of a flow curve hysteresis. 10 1/s and 50 1/s were chosen as relevant shear rates (see table 3).

The stability of the beverages was tested by measuring the phase-separated volume in a cylinder as well as visually. When visually clear flocs were determined the system was classified as unstable (see table 3).

The surface weighted volume mean diameters D3,2 and D4,3 of the particles in the beverage were determined by laser diffraction to get a value for sandiness (see table 3).

The amount of unstable dispersed mater was measured by centrifugation of the final product for 20 minutes at 2800g and 20°C. The percentage of the sediment (sediment/total mass x 100) was measured after 5 minutes of dripping out the water (see table 3).

**Table 3**

| Powder | | T1* | T2 | T4* | T5 | T6 |
|---|---|---|---|---|---|---|
| Total solids content in final product | % | 20.00% | 20.00% | 20.00% | 20.00% | 20.00% |
| pH | - | 3.55 | 3.61 | 3.64 | 3.67 | 3.86 |
| D3,2 wet 5 min. | micron | 8.2 | 6 | 5.4 | 5.5 | 13.46 |
| D4,3 wet 5 min. | micron | 52.2 | 32 | 13.1 | 14.5 | 21.8 |
| Phase separation 15 min. | % | 0 | 0 | 0 | 0 | 0 |
| Stable after 15min. | | yes | yes | yes | yes | yes |
| Phase separation 45 min. | % | 0 | 0 | 0 | 0 | 0 |
| Stable after 45min. | | yes | yes | yes | yes | yes |
| eta 10 1/sec. 5min | mPas | 40 | 35 | 26 | 21 | 14 |
| eta 50 1/sec. 5min | mPas | 37 | 33 | 26 | 21 | 11 |
| Centrifugation | [% w/w] | 15.2 | 10.1 | 8.5 | 6.5 | 3.6 |

| | | | | | | |
|---|---|---|---|---|---|---|
| *comparative examples | | | | | | |

Further example were prepare in the same way as described in Example 1 and they are given in Table 4. The used material was a standard spray dried skim milk powder as source for a milk protein. The soy protein originates from a soy protein isolate: FXP 219 D ex Solae, as pea protein Pisane HD NO5 ex Cosucrua was used. The stabiliser are: Blanose 7LF ex Hercules (SCMC 7), Blanose 9M31F ex Hercules (SCMC 9), SB-Pectin is a Sugar beet Pectin of type Genu beta ex CP Kelco, and the HM Pectin is a JMJ type high methoxy pectin ex CP Kelco. The used maltodextrin is a DE 12 maltodextrin ex Rouquette (Glucidex IT 12).

**Table 4: Different proteins and stabilisers**

| Example | | *2 | *3 | *4 | *5 | 6 | 7 |
|---|---|---|---|---|---|---|---|
| Type | | SCMC 7 | SCMC 7 | SCMC 9 | SCMC 7 | SB-Pectin | HM Pectin |
| Protein source | | soy | soy | SMP | SMP | soy | pea |
| Protein powder | SMP | 0% | 0% | 65% | 65% | 0% | 0% |
| | Soy | 30% | 30% | 0% | 0% | 22% | 22% |
| | Pea | 0% | 0% | 0% | 0% | 0% | 0% |
| Maltodextrin | MD12 | 62% | 62% | 28% | 28% | 72% | 72% |
| Citric acid | | 4.00% | 4.00% | 3.00% | 3.00% | 3.00% | 3.00% |
| Biopolymer | | 2.00% | 2.00% | 2.00% | 2.00% | 3.00% | 3.00% |
| T in | [°C] | 159.5 | 160 | 160 | 160 | 159.5 | 160 |
| T out | [°C] | 83.4 | 83.7 | 82.7 | 81.5 | 84.1 | 84.1 |
| Total solids content in final product | % | 20% | 20% | 20% | 20% | 20% | 20% |
| pH | | 4.16 | 5.6 | 5.3 | 4.66 | 3.8 | 3.5 |
| D3,2 wet 5 min. | micron | 8.1 | 5 | 8.1 | 10.1 | 7.1 | 25.6 |
| D4,3 wet 5 min. | micron | 12.4 | 12.1 | 52 | 24.3 | 14.2 | 54.6 |
| Phase separation 15 min. | % | 0 | 0 | 0 | 0 | 0 | 0 |
| Stable after 15min. | | slightly flocculated | slightly flocculated | yes | yes | yes | yes |
| Phase separation 45 min. | % | 0 | 0 | 0 | 0 | 0 | 0 |
| Stable after 45min. | | slightly flocculated | slightly flocculated | yes | yes | yes | yes |
| eta 10 1/sec. 5min | mPas | 23 | 30 | 49 | 55 | 18 | 52 |
| eta 50 1/sec. 5min | mPas | 13 | 28 | 52 | 43 | 16 | 49 |
| centrifugation | % | 29.6 | 22 | 13.5 | 22.3 | 16.97 | 22.9 |

| | | | | | | | |
|---|---|---|---|---|---|---|---|
| *comparative examples | | | | | | | |

Reference samples were produced for comparison to the above examples.

**Table 5: Reference samples**

| Example | | Ref 1 | Ref 2 | Ref 3 | Ref 4 | Ref 5 |
|---|---|---|---|---|---|---|
| Protein source | | Soy | Soy | SMP | SMP/ SCMC 7 | SMP/HM-Pectin |
| Protein powder | SMP | 0.0% | 0.0% | 63.0% | 65.0% | 65.0% |
| | Soy | 28.5% | 30.0% | 0.0% | 0.0% | 0.0% |
| | Pea | 0.0% | 0.0% | 0.0% | 0.0% | 0.0% |
| Maltodextrin | IT 12 | 67.5% | 67.0% | 34.0% | 32.0% | 35.0% |
| Citric acid | | 4.0% | 3.0% | 3.0% | 3.0% | 2.0% |
| Biopolymer | | 0.0% | 0.0% | 0.0% | 2.0% | 4.0% |
| T in | [°C] | 160.5 | 161 | 160 | 160 | 160 |
| T out | [°C] | 83.8 | 82.8 | 85 | 83.9 | 85 |
| Total solids content in final product | % | 20% | 20% | 20% | 20% | 20% |
| pH | | 3.8 | 5.5 | 4.5 | 5.6 | 5.2 |
| D3,2 wet 5 min. | micron | 9.5 | 5.5 | 33.7 | 0.34 | 22.1 |
| D4,3 wet 5 min. | micron | 28 | 25.5 | 69.4 | 110 | 82 |
| Phase separation 15 min. | % | 3 | 0 | 37 | 0 | 5 |
| Stable after 15min. | | strongly flocculated | slightly flocculated | strongly flocculated | yes | strongly flocculated |
| Phase separation 45 min. | % | 4 | 0.5 | 44 | 0 | 8 |
| Stable after 45min. | | strongly flocculated | slightly flocculated | strongly flocculated | yes | strongly flocculated |
| eta 10 1/sec. 5min | mPas | 117 | 58 | 70 | 41 | 203 |
| eta 50 1/sec. 5min | mPas | 58 | 29 | 35 | 40 | 356 |
| centrifugation | % | 21.3 | 36.7 | 21.7 | 4.7 | 45.2 |

Examples from agglomeration are given in table 6. A1 was agglomerated in a so-called multistage drier, where a fluid bed is integrated in the spray tower. Sample A2 and A2.2 were produced by fluid bed agglomeration of a spray-dried powder. An external fluid bed was used and a surplus of Glucidex IT 12 (ex Roquette) was used in this process. It was possible to disperse the agglomerated powder by adding it to water and by stirring the mass for 20 seconds with a spoon. This shows that the powder has good instant properties. The non-agglomerated samples (table 4, 5) showed less ideal instant properties and they were dispersed shortly by a blender type of equipment for 15 sec.

**Table 6: Examples for agglomerated powders**

| Example | | A1* | A2 | A2.2 |
|---|---|---|---|---|
| Protein source | | Soy/SMP | Soy | Soy |

| Example | | A1 | A2 | A2.2 |
|---|---|---|---|---|
| Protein powder | SMP | 15.8% | 0.0% | 0.0% |
| | Soy | 26.9% | 17.0% | 17.0% |
| | Pea | 0.0% | 0.0% | 0.0% |
| Maltodextrin | IT 12 | 49.6% | 78.8% | 78.8% |
| Citric acid | CA | 4.0% | 2.9% | 2.9% |
| Pectin | HM-Pecti | 3.1% | 1.4% | 1.4% |
| Total solids content in final product | % | 20.0% | 20.0% | 40.0% |
| pH | | 4.4 | 3.83 | 3.8 |
| D3,2 wet 5 min. | micron | 7.3 | 11 | 10.4 |
| D4,3 wet 5 min. | micron | 16.3 | 22.6 | 20.3 |
| Phase separation 15 min. | % | 0 | 0 | 0 |
| Stable after 15min. | | yes | yes | yes |
| Phase separation 45 min. | % | 0 | 0 | 0 |
| Stable after 45min. | | yes | yes | yes |
| eta 101/sec. 5min | mPas | 69 | 10 | 35 |
| eta 501/sec. 5min | mPas | 58 | 8 | 36 |
| centrifugation | % | 25.4 | 9.9 | 21.1 |

| | | | | |
|---|---|---|---|---|
| *comparative example | | | | |

## Claims

1. A process for making a powdered precursor for preparing an acidic beverage upon admixture of the powdered precursor with a liquid, the process comprising the steps:
(a) preparing a first slurry comprising a protein source and a stabiliser in a weight ratio of protein:stabiliser of 5:1 to 12:1, said first slurry having a neutral or acidic pH below the isoelectric point of the protein or above the isoelectric point of the protein and said stabilizer being selected from pectins, carboxymethylcelluloses, soybean polysaccharides, glycol alginate esters and mixtures thereof.
(b) adjusting the pH of the first slurry, if necessary, to a value in the range of from 3.5 to 4.2; and
(c) spray drying the first slurry after step (a) or step (b)
wherein a second slurry is prepared comprising the protein source, a third slurry is prepared comprising the stabiliser and the second and third slurries are then mixed to form said first slurry.

2. A process according to claim 1, wherein carbohydrate is added to at least one slurry, preferably the second slurry.

3. A process according to any preceding claim, further comprising the step of subjecting the slurry or any of the slurries, as appropriate to a heat treatment, preferably in the range of from 40°C to 80°C.

4. A process according to any preceding claim, further comprising the step of homogenizing first slurry.

5. A process according to any preceding claim, further comprising agglomerating the spray dried product of step (c).

6. A process according to any preceding claim, wherein in step (a) the first slurry has a pH below the isoelectric point of the protein, preferably a pH below 3.9.

7. A process according to any of claims 1 to 5, wherein in step (a) the first slurry has a pH above the isoelectric point of the protein.

8. A process according to claim 1, wherein the stabiliser in the third slurry is neutral or is negatively charged.

9. A process according to any preceding claim, wherein the protein source comprises a plant protein, an animal protein or mixtures thereof.

10. A process according to claim 9, wherein the plant protein is selected from soy protein, pea protein or lupin protein or mixtures thereof, and/or the animal protein is dairy protein.

11. A process according to claim 1, wherein the stabiliser is a pectin.

12. A process according to claim 1 or claim 11, wherein the amount of stabiliser in the third slurry is from 0.01 to 20 wt%, preferably from 0.1 to 20 wt%.

13. A process according to any preceding claim wherein in step (d) one or more further ingredients are added to the mixture of slurries, these ingredients preferably being selected from fat, emulsifiers and organic acids.

## Patentansprüche

1. Verfahren zum Herstellen eines pulverisierten Vorläufers zum Herstellen eines sauren Getränks unter Vermischung des pulverisierten Vorläufers mit einer Flüssigkeit, wobei das Verfahren die Schritte umfasst:
(a) Herstellen einer ersten Aufschlämmung, umfassend eine Proteinquelle und einen Stabilisator in einem Gewichtsverhältnis von Protein:Stabilisator von 5:1 bis 12:1, wobei die erste Aufschlämmung einen neutralen oder sauren pH unter dem isoelektrischen Punkt des Proteins oder über dem isoelektrischen Punkt des Proteins hat und der Stabilisator ausgewählt wird aus Pektinen, Carboxymethylcellulosen, Sojapolysacchariden, Glycolalginatestern und Gemischen daraus;
(b) Anpassen des pH der ersten Aufschlämmung, falls notwendig, an einen Wert im Bereich von 3,5 bis 4,2; und
(c) Sprühtrocknen der ersten Aufschlämmung nach Schritt (a) oder Schritt (b)
worin eine zweite Aufschlämmung hergestellt wird umfassend die Proteinquelle, eine dritte Aufschlämmung hergestellt wird umfassend den Stabilisator, und die zweite und dritte Aufschlämmung dann gemischt werden, um die erste Aufschlämmung zu bilden.

2. Verfahren gemäß Anspruch 1, worin Kohlenhydrat zu mindestens einer Aufschlämmung, vorzugsweise der zweiten Aufschlämmung, zugegeben wird.

3. Verfahren gemäß einem vorhergehenden Anspruch, welches ferner den Schritt des Unterwerfens der Aufschlämmung oder einer der Aufschlämmungen soweit erforderlich unter eine Wärmebehandlung, vorzugsweise im Bereich von 40°C bis 80°C, umfasst.

4. Verfahren gemäß einem vorhergehenden Anspruch, welches ferner den Schritt des Homogenisierens der ersten Aufschlämmung umfasst.

5. Verfahren gemäß einem vorhergehenden Anspruch, welches ferner Agglomerieren des sprühgetrockneten Produkts von Schritt (c) umfasst.

6. Verfahren gemäß einem vorhergehenden Anspruch, worin in Schritt (a) die erste Aufschlämmung einen pH unter dem isoelektrischen Punkt des Proteins, vorzugsweise einen pH unter 3,9, hat.

7. Verfahren gemäß einem der Ansprüche 1 bis 5, worin in Schritt (a) die erste Aufschlämmung einen pH über dem isoelektrischen Punkt des Proteins hat.

8. Verfahren gemäß Anspruch 1, worin der Stabilisator in der dritten Aufschlämmung neutral oder negativ geladen ist.

9. Verfahren gemäß einem vorhergehenden Anspruch, worin die Proteinquelle ein Pflanzenprotein, ein Tierprotein oder Gemische davon umfasst.

10. Verfahren gemäß Anspruch 9, worin das Pflanzenprotein ausgewählt wird aus Sojaprotein, Erbsenprotein oder Lupinenprotein oder Gemischen davon und/oder das Tierprotein Molkereiprotein ist.

11. Verfahren gemäß Anspruch 1, worin der Stabilisator ein Pektin ist.

12. Verfahren gemäß Anspruch 1 oder Anspruch 11, worin die Menge an Stabilisator in der dritten Aufschlämmung von 0,01 bis 20 Gew.-%, vorzugsweise von 0,1 bis 20 Gew.-%, ist.

13. Verfahren gemäß einem vorhergehenden Anspruch, worin in Schritt (d) ein oder mehrere weitere Inhaltsstoffe zum Gemisch aus Aufschlämmungen zugegeben werden, wobei diese Inhaltsstoffe vorzugsweise ausgewählt werden aus Fett, Emulgatoren und organischen Säuren.

## Revendications

1. Procédé de fabrication d'un précurseur en poudre pour préparer une boisson acide par l'incorporation du précurseur en poudre avec un liquide, le procédé comprenant les étapes suivantes :
(a) préparer une première pâte comprenant une source de protéines et un stabilisateur dans un rapport en poids de protéine/stabilisateur de 5/1 à 12/1, ladite première pâte ayant un pH neutre ou acide en dessous du point isoélectrique des protéines ou au-dessus du point isoélectrique des protéines et ledit stabilisateur étant choisi parmi les pectines, les carboxyméthylcelluloses, les polysaccharides de soja, les esters d'alginate de glycol et les mélanges de ceux-ci ;
(b) ajuster le pH de la première pâte, si nécessaire, à une valeur dans la plage de 3,5 à 4,2 ; et
(c) sécher par atomisation la première pâte après l'étape (a) ou l'étape (b) dans lequel une deuxième pâte est préparée, qui contient la source de protéines, une troisième pâte est préparée, qui contient le stabilisateur, et la deuxième et la troisième pâtes sont ensuite mélangées pour former ladite première pâte.

2. Procédé selon la des revendication 1, dans lequel des glucides sont ajoutés à au moins une pâte, de préférence la deuxième pâte.

3. Procédé selon l'une quelconque des revendications précédentes, comprenant en outre l'étape consistant à soumettre la pâte ou l'une quelconque des pâtes, comme approprié, à un traitement thermique, de préférence dans la plage de 40 °C à 80 °C.

4. Procédé selon l'une quelconque des revendications précédentes, comprenant en outre l'étape consistant à homogénéiser la première pâte.

5. Procédé selon l'une quelconque des revendications précédentes, comprenant en outre l'étape consistant à agglomérer le produit séché par atomisation de l'étape (c).

6. Procédé selon l'une quelconque des revendications précédentes, dans lequel lors de l'étape (a), la première pâte a un pH en dessous du point isoélectrique des protéines, de préférence un pH en dessous de 3,9.

7. Procédé selon l'une quelconque des revendications 1 à 5, dans lequel lors de l'étape (a), la première pâte a un pH au-dessus du point isoélectrique des protéines.

8. Procédé selon la revendication 1, dans lequel le stabilisateur dans la troisième pâte est neutre ou est chargé négativement.

9. Procédé selon l'une quelconque des revendications précédentes, dans lequel la source de protéines comprend une protéine végétale, une protéine animale ou un mélange de celles-ci.

10. Procédé selon la revendication 9, dans lequel la protéine végétale est choisie parmi la protéine de soja, la protéine de pois ou la protéine de lupin ou des mélanges de celles-ci, et/ou la protéine animale est une protéine laitière.

11. Procédé selon la revendication 1, dans lequel le stabilisateur est une pectine.

12. Procédé selon la revendication 1 ou 11, dans lequel la quantité de stabilisateur dans la troisième pâte est de 0,01 à 20 % en poids, de préférence de 0,1 à 20 % en poids.

13. Procédé selon l'une quelconque des revendications précédentes, dans lequel lors d'une étape (d), un ou plusieurs autres ingrédients sont ajoutés au mélange de pâtes, ces ingrédients étant de préférence choisis parmi les lipides, les émulsifiants et les acides organiques.
